# EUROPEAN PATENT APPLICATION

(11) **EP 4 845 039 A1**
(43) Date of publication of application: **25.11.2026**
(21) Application number: 26179967.0
(22) Date of filing: 20.05.2026
(51) Int. Cl.: H04B 1/401, H04B 1/00, H04B 1/40

(54) **ELECTRONIC DEVICE**

(30) Priority: 22.05.2025 CN 202510671796
(71) Applicant: GUANGDONG OPPO MOBILE TELECOMMUNICATIONS CORP., LTD., Dongguan, Guangdong 523860 (CN)
(72) Inventor: LI, Mingcheng, Wusha, Chang'an, Dongguan, Guangdong, 523860 (CN); YUE, Zhongbo, Wusha, Chang'an, Dongguan, Guangdong, 523860 (CN); MA, Jinshan, Wusha, Chang'an, Dongguan, Guangdong, 523860 (CN); Bo, LIU, Wusha, Chang'an, Dongguan, Guangdong, 523860 (CN); TONG, Lin, Wusha, Chang'an, Dongguan, Guangdong, 523860 (CN)
(74) Representative: Grassi, Stefano

(57) **Abstract**

Provided is an electronic device. The electronic device includes a communication platform, a signal extractor, a parameter fusion module, and a second component. The communication platform is configured to provide multiple first control signals carrying initial operating parameters, the multiple first control signals being used to control multiple first components of a same type respectively. The signal extractor is connected with the communication platform via a communication bus, and configured to extract the initial operating parameters carried by the multiple first control signals transmitted on the communication bus. The parameter fusion module is connected with the signal extractor, and configured to perform a logical operation on parameter values of the multiple initial operating parameters to obtain a target operating parameter. The second component is connected with the parameter fusion module, the second component is of the same type as the first components, and the second component is configured to configure an operating state thereof according to the target operating parameter.

## Description

### TECHNICAL FIELD

Embodiments of the disclosure relate to the field of radio frequency (RF) technology, and particularly to an electronic device.

### BACKGROUND

With the continuous development of RF communication technologies, user requirements for the communication capabilities of electronic devices are constantly increasing. Therefore, to provide stronger communication capabilities, the number of RF-related components provided in electronic devices is increasing, which occupies a large amount of space in electronic devices.

### SUMMARY

In view of the above technical problems, an electronic device is provided. The invention is set out in the appended set of claims.

In the above electronic device, functions required to be implemented by multiple first components of a same type are combined and implemented by one second component, which can reduce the number of components provided in the electronic device, thereby reducing the cost, power consumption, and volume of the electronic device. For the communication platform, the original control logic and original output mode of control signals can be maintained, and there is no need to make any special settings to the communication platform for adapting to the RF system architecture after component combination. Therefore, the embodiments can effectively reduce situations where required functions cannot be met that would otherwise be caused due to unreleased relevant permissions by the communication platform, thereby having good compatibility and flexibility. Moreover, the signal extractor extracts the initial operating parameters determined by the communication platform for individual first components, and the parameter fusion module fuses the initial operating parameters of the multiple first components to obtain the accurate target operating parameter(s), so that the second component after being configured according to the target operating parameter(s) can reliably implement the functions required to be implemented by the multiple first components, thereby ensuring the normal operation of the communication function of the electronic device, and providing good transmission and reception quality of RF signals.

### BRIEF DESCRIPTION OF THE DRAWINGS

In order to clearly illustrate technical solutions in the embodiments of the disclosure or the related art, drawings used in the description of the embodiments or the related art are introduced briefly below. Apparently, the drawings in the following description are only some embodiments of the disclosure, and those skilled in the art can obtain other drawings according to these drawings without creative efforts.
FIG. 1 illustrates an RF system architecture of an electronic device supporting DSDA in the related art.
FIG. 2 illustrates a first RF system architecture of an electronic device according to an embodiment.
FIG. 3 illustrates a second RF system architecture of the electronic device according to an embodiment.
FIG. 4 illustrates a third RF system architecture of the electronic device according to an embodiment.
FIG. 5 is a fourth structural schematic diagram of the electronic device according to an embodiment.
FIG. 6 illustrates a fifth RF system architecture of the electronic device according to an embodiment.
FIG. 7 is a first structural schematic diagram of a signal extractor and a parameter fusion module according to an embodiment.
FIG. 8 is a second structural schematic diagram of the signal extractor and the parameter fusion module according to an embodiment.
FIG. 9 is a structural schematic diagram of an RF power supply according to an embodiment.
FIG. 10 is a structural schematic diagram of an RF controller according to an embodiment.

### Description of reference signs:

Communication platform-100; RF transceiver-110; signal extractor-200; extraction unit-210; parameter fusion module-300; first register-310; sub-register-311; operation unit-320; logic operation circuit-321; second register-330; monitoring unit-340; second component-400; signal combiner-510; signal splitter-520; RF front-end component-610; RF power supply-620; voltage regulator-700; sequence detector-810; signal generator-820; and path selector-830.

### DETAILED DESCRIPTION OF PREFERRED EMBODIMENTS

To make the objectives, technical solutions, and advantages of the disclosure clearer, the disclosure is further described in detail below with reference to the accompanying drawings and embodiments. It should be understood that the specific embodiments described herein are only used to explain the disclosure and are not intended to limit the disclosure.

It is understandable that terms "first", "second", etc., used in the disclosure may be used herein to describe various components, but these components are not limited by these terms. These terms are only used to distinguish one component from another. For example, a first control signal may be referred to as a second control signal, and similarly, a second control signal may be referred to as a first control signal, without departing from the scope of the disclosure.

In addition, the terms "first" and "second" are only used for descriptive purposes and cannot be understood as indicating or implying relative importance or implicitly indicating the number of indicated technical features. Thus, a feature defined with "first" or "second" may explicitly or implicitly include at least one of such feature. The term "multiple" means at least two, for example, two, three, etc., unless otherwise clearly and specifically defined. The term "several" means at least one, for example, one, two, etc., unless otherwise clearly and specifically defined.

The embodiments of the disclosure provide an electronic device, which may be a terminal. The terminal includes, but is not limited to, various personal computers, laptops, smartphones, tablet computers, Internet of Things devices, and portable wearable devices. The Internet of Things device may be a smart speaker, a smart TV, a smart air conditioner, a smart vehicle-mounted device, etc. The portable wearable device may be a smart watch, a smart bracelet, a head-mounted device, etc.

To improve the communication capability of the electronic device, the electronic device can be enabled to support transmission and/or reception of multiple RF signals. The transmission of multiple RF signals is understandable as that there are multiple to-be-transmitted RF signals output from the RF transceiver to the RF front-end component, and the reception of multiple RF signals is understandable as that there are multiple received RF signals output from the RF front-end component to the RF transceiver. For example, in an electronic device supporting dual SIM, two SIM cards may be inserted into the electronic device, and the electronic device is standby on two different networks. The signal frequency bands of RF signals corresponding to the two networks depend on the respective connected networks, which may be the same or different, and the disclosure does not pose limitation on this.

Taking the transmission of RF signals as an example, based on the current RF system architecture of the electronic device, if the electronic device is in a Dual SIM Dual Standby (DSDS) operating state, only one RF transmission path needs to be provided in the electronic device, and the two SIM cards are continuously switched to access this RF transmission path. Due to the extremely fast switching speed, the user perceives that both SIM cards are in a network access state simultaneously. However, based on this switching mode, the electronic device cannot truly make the two SIM cards operate at the same time. For example, when one SIM card is in a call or data connection, the other SIM card can only be in an offline or standby state.

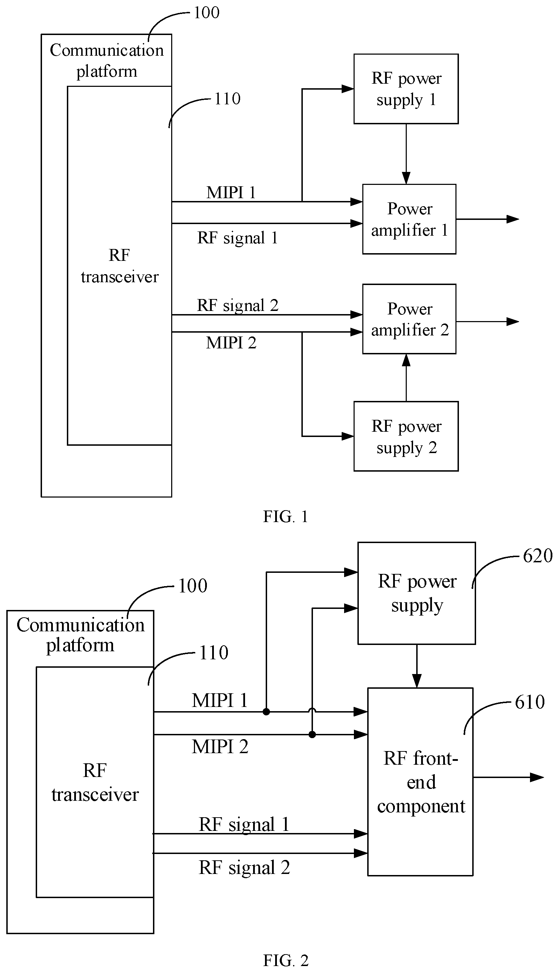

In a case where the electronic device is in a Dual SIM Dual Active (DSDA) operating state, if it truly makes the two SIM cards operate at the same time, two RF transmission paths need to be provided. Specifically, FIG. 1 illustrates an RF system architecture of an electronic device supporting DSDA in the related art. Referring to FIG. 1, each RF transmission path includes at least one power amplifier, and the power amplifier is configured to receive an RF signal from the RF transceiver 110 of the communication platform 100 and amplify the received RF signal. The RF transmission path may further include other RF front-end components such as an RF switch and a filter. The other RF front-end components may be provided between the power amplifier and the RF transceiver 110, or between the power amplifier and the antenna, which is not limited in the disclosure. Correspondingly, in the electronic device, a corresponding RF power supply needs to be provided for each RF transmission path, and the RF power supply is at least used to provide a power supply signal for the power amplifier on the RF transmission path. Therefore, to support the DSDA function, the electronic device needs at least two power amplifiers and two RF power supplies. Such arrangement not only increases the cost of the electronic device, but also increases the power consumption and volume of the electronic device, making it unsuitable for portable electronic devices such as mobile phones.

It is understandable that the RF reception path in the electronic device also has similar problems to the RF transmission path, which is not repeated here. To solve the above problems, the embodiments of the disclosure provide an electronic device, which can combine multiple RF transmission paths or multiple RF reception paths to reduce the number of components needed to be provided in the electronic device, thereby reducing the cost, power consumption, and volume of the electronic device.

Exemplarily, in a DSDA application scenario, taking an RF transmission path including a power amplifier as an example, FIG. 2 illustrates a first RF system architecture of an electronic device according to an embodiment. Referring to FIG. 1 and FIG. 2 together, the electronic device according to the embodiment of the disclosure combines two power amplifiers originally used to support transmission of two RF signals into one power amplifier, and this power amplifier supports the transmission of two RF signals. Correspondingly, the number of RF power supplies 620 each used to provide a power supply signal for the power amplifier can be reduced from two to one. Based on this, the cost of the electronic device can be effectively reduced, and the power consumption and volume of the electronic device can be reduced. However, the inventors have found through research that, when RF signals of different frequency bands are amplified by the power amplifier, the gain coefficients of the power amplifier are not completely the same, and the required power supply signals are also not completely the same. Therefore, based on the combined RF system architecture, it is also necessary to adjust the operating parameter(s) of at least one of the RF front-end components such as the power amplifier and the RF power supply, to ensure that the electronic device can have good transmission and reception quality of RF signals.

It is notable that the electronic device provided by the embodiments of the disclosure is not limited to the DSDA application scenario, and is also applicable to other application scenarios that require simultaneous transmission or reception of multiple RF signals, such as a Carrier Aggregation (CA) application scenario. The carrier aggregation technology aggregates multiple RF signals with different carrier frequencies to provide a wide transmission bandwidth, so as to improve the transmission rate and system capacity of the electronic device. Therefore, multiple RF signals with different carrier frequencies may correspond to/be multiple first control signals. Correspondingly, according to different application scenarios, the number of RF transmission paths or RF reception paths that can be combined in the embodiments of the disclosure is not limited to two in the DSDA application scenario, and may be three, four, etc., which is not limited in the embodiments of the disclosure. For convenience of description, the embodiments of the disclosure provide the drawings and descriptions by taking an application scenario of two transmission paths as an example.

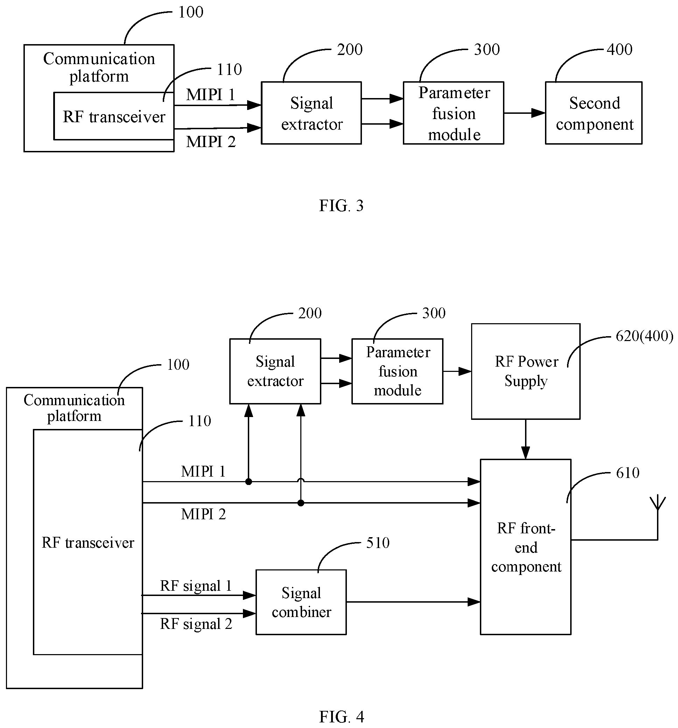

FIG. 3 illustrates a second RF system architecture of the electronic device according to an embodiment. Referring to FIG. 3, the electronic device according to the embodiment of the disclosure includes a communication platform 100, a signal extractor 200, a parameter fusion module 300, and a second component 400.

The communication platform 100 includes an application processor, a modem, and an RF transceiver 110. The application processor is configured to transmit and receive digital signals carrying communication information. The modem is connected with the application processor, and configured to modulate and demodulate the digital signals. The RF transceiver 110 is connected with each of the modem and the RF front-end component 610, and configured to support conversion between signals modulated by the modem and RF signals, and conversion between signals before demodulation by the modem and RF signals. The communication platform 100 is configured to provide multiple first control signals. Specifically, one of the application processor, the modem, and the RF transceiver 110 is configured to generate the first control signals and send the generated first control signals through the connected communication bus. To simplify the drawings, the embodiments of the disclosure show only the RF transceiver 110 in the communication platform 100, and descriptions are given by taking a case where the RF transceiver 110 provides the first control signals as an example.

In some implementations, the communication bus may be a Mobile Industry Processor Interface (MIPI) bus. That is, the MIPI protocol of RF Front-End (RFFE) Control Interface may be used to control the communication process. The RFFE MIPI defines a protocol for digital control and data transmission to achieve efficient transmission and reception of RF signals. Therefore, the MIPI RFFE protocol can help electronic device manufacturers design more compact, efficient, and low-cost RF front-end components, thereby improving the performance and reliability of electronic devices. The MIPI bus is composed of two signal lines for MIPI_SCLK and MIPI_SDATA. MIPI_SCLK is a clock signal provided by the communication platform 100. MIPI_SDATA is a bidirectional data signal, which may be used by the communication platform 100 to write signals into the RF front-end component mounted on the communication bus or read information in registers of the RF front-end component. It is understandable that the subsequent embodiments of the disclosure are described by taking the MIPI bus as an example, but the communication bus may also be other buses other than the MIPI bus, which is not limited in the embodiments.

Further, the electronic device may include multiple communication buses, and components supporting transmission and reception of RF signals of different frequency bands are connected to different communication buses, so as to independently control and manage components corresponding to different frequency bands. In addition, a key component with high requirements for control timing and bandwidth may also occupy a single communication bus, to ensure that it can obtain stable and efficient control signals and avoid interference or data transmission conflicts with other components. The multiple first control signals of the embodiments may be transmitted on different communication buses respectively. For example, the communication platform 100 is configured to provide two first control signals, and the multiple communication buses of the electronic device include two first communication buses, MIPI 1 and MIPI 2, each of the communication buses is used to transmit one corresponding first control signal.

The first control signal is adapted to carry an initial operating parameter(s), and the initial operating parameter refers to an operating parameter determined by the communication platform 100 for the first component. The multiple first control signals are used to control multiple first components of a same type respectively, the number of the first control signals is the same as the number of the first components, and each first component operates under the control of one corresponding control signal. The first component includes, but is not limited to, a Power Amplifier (PA), a Low Noise Amplifier (LNA), an RF switch, a tuner, an RF power supply, etc. For example, two first control signals may be respectively used to control two power amplifiers or two RF circuits. The specific parameter values of the initial operating parameters carried by the multiple first control signals may be the same or different. For example, when the multiple first components are used to support reception or transmission of RF signals of the same or similar frequency bands, the initial operating parameters carried by the multiple first control signals may be the same. When the multiple first components are used to support reception or transmission of RF signals with far-apart frequency bands, the initial operating parameters carried by the multiple first control signals may be different.

It is notable that the aforementioned first components are only used to assist in explaining the association between the multiple first control signals. In the electronic device according to the embodiments of the disclosure, the first components do not exist, but the functions of multiple first components are integrated and implemented by the second component 400. In addition, in the embodiments of the disclosure, signals used to control the first components are collectively referred to as first control signals, but the first control signal may further include multiple first control sub-signals, and different first control sub-signals are used to configure different operating parameters of the first component respectively. Taking the first component as an RF power supply as an example, that is, the first component is a first RF power supply, in this case, the first control signal output by the communication platform 100 may include multiple first control sub-signals, where at least one first control sub-signal is used to control the first RF power supply to sleep or turn on, and another first control sub-signal is used to control the voltage of the power supply signal output by the first RF power supply. In the embodiments, each of the multiple first control signals may also be considered as being used to control the second component only to implement transmission or receipt of a RF signal of one frequency band, the multiple first control signals are respectively configured for implementations of transmission or receipt of RF signals of multiple different frequency bands, and the target operating parameter obtained by the parameter fusion module (as described below) enables the second component to implement transmission or receipt of a RF signal with the multiple different frequency bands at a time.

The signal extractor 200 is connected with the communication platform 100 via the communication bus. Specifically, when the communication bus is a MIPI bus, the signal extractor 200 may include a MIPI communication core, which may also be referred to as an MIPI Slave IP. The signal extractor 200 may parse signals transmitted on the MIPI bus, and output information obtained through parsing in real time. The information obtained through parsing includes, but is not limited to, the initial operating parameters carried by the first control signals. Specifically, the signals transmitted on the MIPI bus may include multi-bit data, and the multi-bit data is used to carry information such as a communication address and data. For example, the multi-bit data is SA[3:0], Address[15:0], and Data[7:0]. By parsing the communication address of the signal transmitted on the communication bus in real time, the signal extractor 200 may determine whether the currently transmitted signal is a first control signal provided to the first component, and may extract the initial operating parameters carried by the multiple first control signals transmitted on the communication bus for subsequent processing by the parameter fusion module 300. It is notable that the signal extractor 200 may also extract other information carried by other signals on the communication bus, which is not limited in the embodiments.

The parameter fusion module 300 is connected with the signal extractor 200, and configured to perform a logical operation on parameter values of the multiple initial operating parameters to obtain a target operating parameter(s). A second component 400 is connected with the parameter fusion module 300, the second component 400 is of the same type as the first components, and the second component 400 is adapted to configure an operating state of the second component 400 according to the target operating parameter(s).

The second component 400 is configured to implement functions of the multiple first components. That is, in the embodiments, the functions required to be implemented by the multiple first components in the related art are integrated and implemented by one second component 400, which is equivalent to omitting some first components. For example, if both the second component 400 and the multiple first components are of the RF power supply type, that is, the first components are first RF power supplies and the second component 400 is a second RF power supply, and the multiple first RF power supplies are respectively used to provide power supply signals for corresponding multiple RF front-end components, then the second RF power supply is used to provide the power supply signals for the aforementioned multiple RF front-end components. If both the second component 400 and the multiple first components are of the power amplifier type, that is, the first components are first power amplifiers and the second component 400 is a second power amplifier, and the multiple first power amplifiers are respectively used to amplify corresponding multiple RF signals, then the second RF power supply is used to amplify the aforementioned multiple RF signals. Based on this, the embodiments of the disclosure can not only reduce the static power consumption generated when the first components are in a sleep state, but also reduce the occupation of the internal space of the electronic device by the first components.

The logical operation supported by the parameter fusion module 300 includes, but is not limited to, at least one of taking a maximum value, taking a minimum value, AND operation, OR operation, NOT operation, XOR (Exclusive OR) operation, XNOR operation, addition, subtraction, etc., so as to meet the fusion requirements of different types of initial operating parameters in different application scenarios.

For example, if the first control signal is used to trigger a corresponding first component to sleep or turn on, in the RF system architecture of the embodiments, the functions of the multiple first components in the related art are integrated into one second component 400, and the second component 400 needs to be turned on as long as any first control signal instructs its corresponding first component to turn on. Therefore, an OR operation may be used to fuse the initial operating parameters used to control the first components to sleep or turn on in the multiple first control signals, to obtain a target operating parameter for configuring and controlling the second component 400.

For another example, if the first control signal is used to control the voltage of a corresponding first component, in the RF system architecture of the embodiments, the functions of the multiple first components in the related art are integrated into one second component 400, and depending on the specific function of the voltage, the second component 400 may be controlled based on the maximum or minimum voltage among the voltages of the multiple first components, to ensure that the voltage of the second component 400 can meet the requirements. Therefore, an operation of taking a maximum value or an operation of taking a minimum value may be used to fuse the initial operating parameters used to control the voltages of the first components in the multiple first control signals, to obtain a target operating parameter for configuring and controlling the second component 400.

In the embodiments of the disclosure, the functions required to be implemented by multiple first components of the same type are combined and implemented by one second component 400, which can reduce the number of components provided in the electronic device, thereby reducing the cost, power consumption, and volume of the electronic device. For the communication platform 100, the original control logic and original output mode of control signals can be maintained, and there is no need to make any special settings to the communication platform 100 for adapting to the RF system architecture after component combination. Therefore, the embodiments can effectively reduce situations where required functions cannot be met that would otherwise be caused due to unreleased relevant permissions by the communication platform 100, thereby having good compatibility and flexibility. Moreover, the signal extractor 200 extracts the initial operating parameters determined by the communication platform 100 for individual first components, and the parameter fusion module 300 fuses the initial operating parameters of the multiple first components to obtain the accurate target operating parameter(s), so that the second component 400 after being configured according to the target operating parameter(s) can reliably implement the functions to be implemented by the multiple first components, thereby ensuring the normal operation of the communication function of the electronic device, and providing good transmission and reception quality of RF signals.

FIG. 4 illustrates a third RF system architecture of the electronic device according to an embodiment. Referring to FIG. 4, in an embodiment, the electronic device further includes a signal combiner 510, an RF front-end component 610, and an antenna. The signal combiner 510 has multiple input terminals and one output terminal. The multiple input terminals of the signal combiner 510 are all connected to the communication platform 100, and the signal combiner 510 is configured to combine multiple RF signals output by the communication platform 100 into one RF signal. The signal combiner 510 may include a combiner/mixer, a power splitter/divider, etc. The RF front-end component 610 is connected with the output terminal of the signal combiner 510, and configured to perform transmission processing on the RF signal output by the signal combiner 510. The transmission processing includes, but is not limited to, amplification processing, filtering processing, etc. Correspondingly, the RF front-end component 610 connected with the signal combiner 510 includes, but is not limited to, a power amplifier, a filter, etc. The antenna is connected with the RF front-end component 610, and configured to transmit the processed RF signal. The communication platform 100 is configured to determine, according to signal frequency bands of the RF signals output by the communication platform 100, corresponding initial operating parameters.

Referring to FIG. 1, when there is no signal combiner 510 provided, the multiple RF signals output by the communication platform 100 are respectively provided to different RF front-end components 610 (for example, the power amplifiers illustrated in FIG. 1). In this embodiment, the multiple RF signals to be transmitted are combined into one RF signal through the signal combiner 510, so that multiple power amplifiers may be combined into one power amplifier as illustrated in FIG. 4, and correspondingly, multiple RF power supplies 620 used to supply power to the power amplifiers may be combined into one RF power supply 620.

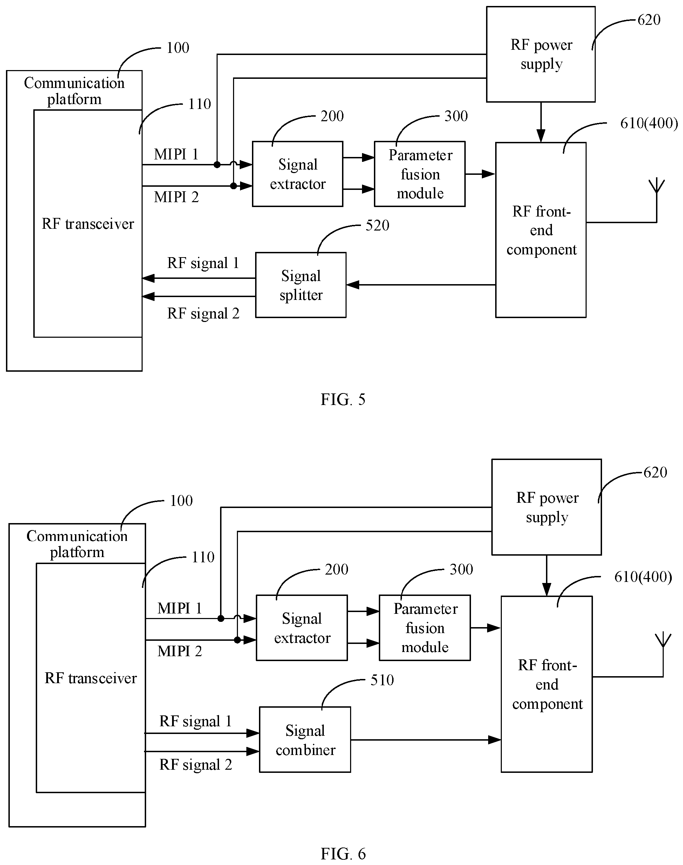

FIG. 5 illustrates a fourth structural schematic diagram of the electronic device according to an embodiment. Referring to FIG. 5, in an embodiment, the electronic device further includes an antenna, an RF front-end component 610, and a signal splitter 520. The antenna is configured to receive an RF signal. The RF front-end component 610 is connected with the antenna, and configured to perform reception processing on the received RF signal. The reception processing includes, but is not limited to, amplification processing, filtering processing, etc. Correspondingly, the RF front-end component 610 connected with the signal splitter 520 includes, but is not limited to, a low noise amplifier, a filter, etc. The input terminal of the signal splitter 520 is connected with the RF front-end component 610, and the output terminals of the signal splitter 520 are connected with the communication platform 100. The signal splitter 520 is configured to split one RF signal into multiple RF signals, and output the multiple RF signals to the communication platform 100. The signal splitter 520 may include a filter, a power splitter/divider, etc. The communication platform 100 is configured to determine, according to signal frequency bands of the received RF signal, corresponding initial operating parameters. In this embodiment, the RF front-end component 610 first performs reception processing on one RF signal received by the antenna, and then the signal splitter 520 splits the received and processed RF signal into multiple RF signals, so that multiple low noise amplifiers in the related art can be combined into one low noise amplifier, and correspondingly, multiple RF power supplies 620 used to supply power to the low noise amplifiers can be combined into one RF power supply 620.

In an embodiment, referring to FIG. 4 again, the second component 400 includes an RF power supply 620. The RF power supply 620 is connected with the RF front-end component 610, and the RF power supply 620 is configured to provide a power supply signal for the RF front-end component 610. The operating parameter includes a power supply parameter, and the power supply parameter includes at least one of a power supply voltage, a power supply current, and power supply power. The communication platform 100 is configured to determine, according to signal frequency bands of the RF signals, corresponding initial power supply parameters, and the RF power supply 620 is configured to provide the power supply signal according to the target power supply parameter. Specifically, taking the RF front-end component 610 including a power amplifier as an example, RF signals of different signal frequency bands have different requirements for the bandwidth and gain of the power amplifier. A high power supply voltage may provide a large dynamic range, which enables the power amplifier to process signals with a large amplitude. It is understandable that RF signals of higher frequency bands require a wider bandwidth to transmit information. In order to achieve bandwidth widening while maintaining a certain gain, a higher power supply voltage is required to achieve stable gain in a wide frequency band. Therefore, based on the signal frequency bands of the RF signals to be transmitted, the communication platform 100 may determine the initial power supply parameter(s) corresponding to each signal frequency band, so as to meet the power supply requirements of the power amplifier for each RF signal.

In the embodiments of the disclosure, multiple first RF power supplies 620 in the related art are combined into one second RF power supply 620, and the single RF power supply 620 is used to provide the power supply signal(s), which can reduce the number of RF power supplies 620 provided in the electronic device, thereby reducing the cost, power consumption, and volume of the electronic device. Moreover, the signal extractor 200 extracts the initial operating parameters determined by the communication platform 100 for the individual first RF power supplies 620, and the parameter fusion module 300 fuses the initial power supply parameters of the multiple first RF power supplies 620 to obtain the accurate target power supply parameter(s), so that the second RF power supply 620 after being configured according to the target power supply parameter(s) can provide sufficient power supply voltage, power supply current, and power supply power for the RF front-end component 610 such as power amplifier, thereby ensuring the normal operation of the communication function of the electronic device, and providing good transmission and reception quality of RF signals.

In an embodiment, the second component 400 is the RF front-end component 610, the operating parameters correspond to the type of the RF front-end component 610 (i.e., the operating parameters include operating parameters of the RF front-end component 610), and the RF front-end component 610 is configured to perform transmission processing or reception processing on the RF signal(s) according to the target operating parameter(s). The RF front-end component 610 includes, but is not limited to, a power amplifier, a low noise amplifier, a filter, an RF switch, a tuner, etc. It is illustrated by three examples below.

For example, FIG. 6 illustrates a fifth RF system architecture of the electronic device according to an embodiment. Referring to FIG. 6, it is illustrated by taking a case where the second component 400 includes a power amplifier serving as the RF front-end component 610 as an example. Signals of different frequency bands have different attenuation degrees during transmission. Specifically, high-frequency signals are more prone to attenuation than lowfrequency signals due to dielectric loss and other reasons. To make RF signals of different frequency bands reach the same or similar power level after amplification, it is necessary to amplify, through a gain coefficient, the RF signal of frequency band with large attenuation by a larger multiple. Therefore, based on the signal frequency bands of the RF signals to be transmitted, the communication platform 100 may determine an initial gain coefficient of the power amplifier corresponding to each signal frequency band, to compensate for the loss of the RF signals during transmission.

For another example, referring to FIG. 5 again, it is illustrated by taking a case where the second component 400 includes a low noise amplifier serving as the RF front-end component 610 as an example. Signals of different frequency bands have different attenuation degrees during transmission. Specifically, high-frequency signals are more prone to attenuation than lowfrequency signals due to dielectric loss and other reasons. To make RF signals of different frequency bands reach the same or similar power level after amplification, it is necessary to amplify, through a gain coefficient, the RF signal of frequency band with large attenuation by a larger multiple. Therefore, based on the signal frequency bands of the received RF signal, the communication platform 100 may determine an initial gain coefficient of the low noise amplifier corresponding to each signal frequency band, to compensate for the loss of the RF signals during transmission.

For a further example, it is illustrated by taking a case where the second component 400 includes a filter as an example. Signals of different frequency bands have different attenuation degrees during transmission. Specifically, when multiple first filters are combined into one second filter, the second filter needs to ensure that the original multiple RF signals can normally pass through the second filter, and the second filter can filter out clutter signals of other frequency bands other than the multiple RF signals. Therefore, based on the signal frequency bands of the RF signals to be transmitted or received, the communication platform 100 may determine an initial center frequency and bandwidth of the filter corresponding to each signal frequency band, to ensure reliable transmission of the RF signals between the antenna and the communication platform 100.

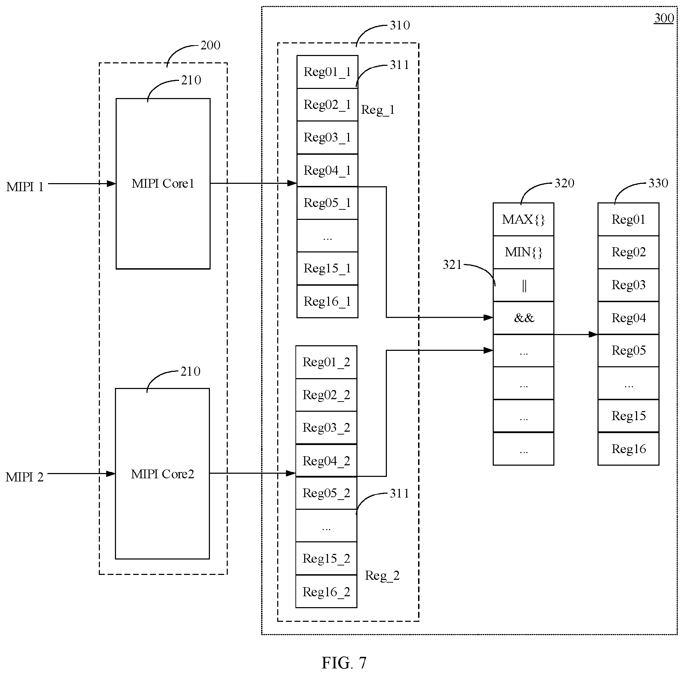

FIG. 7 is a first structural schematic diagram of the signal extractor 200 and the parameter fusion module 300 according to an embodiment. Referring to FIG. 7, in an embodiment, the parameter fusion module 300 includes a first register 310, an operation unit 320, and a second register 330.

The first register 310 may include one or more sub-registers 311 to expand the storage space of the first register 310. The multiple sub-registers 311 may have same or different number of bits of storage space, which may be set according to needs and is not limited in the embodiments. The first register 310 is configured to store the multiple initial operating parameters. One initial operating parameter may include one bit of data or multiple bits of data. Correspondingly, in the first register 310, storage locations with different numbers of bits may be respectively configured for different initial operating parameters of different components, so that the initial operating parameters obtained by the signal extractor 200 may be correctly stored in the corresponding storage locations.

Specifically, during operation of the electronic device, the communication platform 100 may adaptively adjust the initial operating parameters of the components according to environmental information of the communication environment of the electronic device, and send, through the first control signals, the adjusted initial operating parameters to the communication bus. The signal extractor 200 obtains each first control signal transmitted on the communication bus, parses the first control signal to obtain information of a communication address, and stores the initial operating parameter carried by the first control signal in a storage location of the first register 310 corresponding to the communication address, which may be regarded as completion of extracting the initial operating parameter. Taking both the second component 400 and the multiple first components being a RF power supply 620 as an example, that is, the first components are first RF power supplies 620 and the second component 400 is a second RF power supply 620, the signal extractor 200 may write the initial operating parameter used to configure the voltage of the power supply signal of one first RF power supply 620 into a first target location of the first register 310, and write the initial operating parameter used to configure the voltage of the power supply signal of another first RF power supply 620 into a second target location of the first register 310.

The operation unit 320 is connected with the first register 310, and configured to obtain the multiple initial operating parameters stored in the first register 310, and perform a logical operation(s) on parameter values of the multiple initial operating parameters to obtain a target operating parameter(s). For example, the operation unit 320 may be provided in advance with multiple logic operation circuits 321, and the logic operation circuits 321 directly perform the logical operation on the initial operating parameters from the first register 310. For another example, the operation unit 320 may change the internal composition and connection relationship of the operation unit 320, according to the parameter type of the initial operating parameters to be operated, thereby changing the specific operation type of the logical operation supported by the operation unit 320, and thus performing required logical operation on the initial operating parameters from the first register 310.

The second register 330 is connected with the operation unit 320, and the second register 330 is configured to store the target operating parameter(s) generated by the operation unit 320. The second component 400 is connected with the second register 330, and configured to obtain the target operating parameter stored in the second register 330.

In the embodiments of the disclosure, by providing the first register 310, the initial operating parameters carried by the first control signals may be temporarily stored. Especially when the initial operating parameter includes multiple bits of data, the operation unit 320 may perform the logical operation on the initial operating parameters after the complete initial operating parameters are written into the first register 310, avoiding data loss caused by a mismatch between the transmission speed of the first control signals and the operation speed of the operation module. By providing the second register 330, the target operating parameter(s) output by the operation unit 320 may be temporarily stored. Especially when the target operating parameter includes multiple bits of data, the second component 400 may read the target operating parameter and configure the second component 400 itself after the complete target operating parameter is written into the second register 330, so as to ensure that the second component 400 is in a normal operating state. Moreover, before the signal extractor 200 writes new initial operating parameters into the first register 310, both the first register 310 and the second register 330 can effectively maintain the stored operating parameters, making the stored operating parameters less prone to loss or change due to external interference, thereby improving the data reliability of the parameter fusion module 300.

With continued reference to FIG. 7, in an embodiment, the first register 310 includes multiple sub-registers 311. Exemplarily, if the communication platform 100 provides two first control signals, the first register 310 may include two sub-registers 311, namely Reg_1 and Reg_2, and the two sub-registers 311 are respectively used to store the initial operating parameters carried by the two first control signals.

Each sub-register 311 is configured with multiple first storage bits, and the second register 330 is configured with multiple second storage bits. The number of first storage bits in each sub-register 311 is the same as the number of second storage bits in the second register 330, and the multiple first storage bits respectively correspond to the multiple second storage bits. The initial operating parameters of the RF power supplies 620 and multiple RF front-end components 610 supporting reception or transmission of a same RF signal may be stored in a same sub-register 311. Therefore, the number of the first storage bits and the number of the second storage bits may be determined according to the number of data bits of the initial operating parameters to be stored, for example, 8, 16, 32, etc. As illustrated in FIG. 7, each sub-register 311 and the second register 330 each are configured with 16 storage bits. The 16 first storage bits of one sub-register 311 are Reg01_1, Reg02_1, Reg03_1...Reg16_1 respectively, the 16 first storage bits of the other sub-register 311 are Reg01_2, Reg02_2, Reg03_2...Reg16_2 respectively, and the 16 storage bits of the second register 330 are Reg01, Reg02, Reg03...Reg16 respectively.

The operation unit 320 is configured to obtain initial operating parameters stored in same first storage bits of the multiple sub-registers 311, and store the generated target operating parameter in the corresponding second storage bit. For example, a logical operation may be performed on initial operating parameters stored in the first storage bits Reg01_1 and Reg01_2, and the generated target operating parameter may be stored in the corresponding second storage bit Reg01. In the embodiments of the disclosure, based on the above arrangement of the first storage bits and the second storage bits, the initial operating parameters may be directly stored in the first register 310 according to the communication addresses carried by the first control signals, and after the logical operation(s) are performed, the target operating parameter is stored in the second storage bit with corresponding serial number, thereby simplifying the read and write rules of the operating parameters.

In an embodiment, the operation unit 320 includes multiple logic operation circuits 321. Multiple input terminals of each logic operation circuit 321 are capable of being respectively connected to same first storage bits of the multiple sub-registers 311, and the output terminal of each logic operation circuit 321 is capable of being connected to a corresponding second storage bit of the second register 330. Specifically, logic operation circuits 321 corresponding to all logical operations may be preset in the operation unit 320. During the logical operation, the input terminals of the required logic operation circuit 321 are directly connected to the corresponding first storage bits of the individual sub-registers 311, so that the logical operation can be completed simply and quickly.

In an embodiment, the parameter fusion module 300 further includes an operation selector and a first control circuit.

The operation selector has multiple first terminals and multiple second terminals. The multiple first terminals of the operation selector are respectively connected to the multiple first storage bits of the multiple sub-registers 311, and the multiple second terminals of the operation selector are respectively connected to the multiple logic operation circuits 321. The first control circuit is connected with the operation selector, and configured to selectively conduct, according to to-be-operated first storage bits, a signal transmission path between each first terminal connected with the to-be-operated first storage bits and any second terminal of the operation selector, so as to electrically connect the to-be-operated first storage bits with a respective logic operation circuits 321. That is, the logic operation circuit 321 may be electrically connected with different first storage bits at different times. For example, the logic operation circuit 321 for taking a maximum value is electrically connected with reg01_1 and reg01_2 at a first time, and the logic operation circuit 321 for taking a maximum value is electrically connected with reg02_1 and reg02_2 at a second time. It is understandable that multiple types of initial operating parameters may require a same operation logic. Since different initial operating parameters are transmitted sequentially on the first communication bus, the operation module also works sequentially, and it is not required to perform multiple logical operations at the same time. Therefore, partial reuse of circuits can be realized through design to reduce the number of logic operation circuits 321 provided, thereby reducing the space occupation of the logic operation circuits 321 in the electronic device.

In some embodiments, each first storage bit and each second storage bit may be fixedly connected to a corresponding logic operation circuit 321 without switching during the operation, so as to simplify the control logic of the operation module.

In an embodiment, the operation unit 320 includes multiple logic operation circuits 321, multiple operation combination paths, and a second control circuit.

The logic operation circuits 321 may include three basic logical operations of AND operation, OR operation, and NOT operation, and may also include common logical operations such as taking a maximum value and taking a minimum value. The operation combination paths are used to connect different logic operation circuits 321. Through different connection modes of the operation combination paths, the operation unit 320 may further support relatively complex logical operations such as NAND operation, NOR operation, XOR operation, and XNOR operation. The second control circuit is connected with the operation combination paths, and configured to control on-off of each operation combination path according to the to-be-operated first storage bits, so as to connect the multiple logic operation circuits 321 into a combined logic circuit, and the combined logic circuit is configured to support a logical operation for the to-be-operated first storage bits. Since different initial operating parameters are transmitted sequentially on the first communication bus, the operation module also works sequentially, and it is not required to perform multiple combined logical operations at the same time. Therefore, partial reuse of circuits can be realized through design to reduce the number of logic operation circuits 321 provided, thereby reducing the space occupation of the logic operation circuits 321 in the electronic device.

In an embodiment, the communication platform 100 may have multiple communication ports, and the multiple communication ports may be respectively connected with corresponding multiple communication buses, so that the communication platform 100 may be connected with the multiple communication buses. Since the multiple communication buses can transmit signals independently of each other at the same time, such embodiment can improve the overall transmission rate of the communication buses, thereby enabling the RF system architecture of the electronic device to have better response speed. The multiple communication buses include at least two first communication buses MIPI 1 and MIPI 2. The first communication bus refers to a communication bus used by the communication platform 100 to provide a first control signal to the first component. The multiple first communication buses are respectively arranged corresponding to the multiple first control signals, that is, one first control signal is transmitted on one corresponding first communication bus, so that interference between different first control signals can be reduced and the reliability of the first control signals during transmission can be improved. Further, the multiple communication buses connected to the communication platform 100 may also include other communication buses other than the first communication buses, and the other communication buses are used to provide control signals for other components other than the first components.

The signal extractor 200 is connected with the communication platform 100 via the multiple first communication buses. Referring to FIG. 7 again, the signal extractor 200 includes multiple extraction units 210. Input terminals of the multiple extraction units 210 are respectively connected with the multiple first communication buses, and output terminals of the multiple extraction units 210 are respectively connected to the multiple sub-registers 311. Each extraction unit 210 is configured to extract the first control signal transmitted on its connected first communication bus, and write the initial operating parameter carried by the first control signal into its connected sub-register 311.

Exemplarily, as illustrated in FIG. 7, the signal extractor 200 is connected with the communication platform 100 via two first communication buses, namely MIPI 1 and MIPI 2, and the two first communication buses MIPI 1 and MIPI 2 are used to transmit first control signals to corresponding first components independently of each other. The signal extractor 200 includes two extraction units 210, namely MIPI Core 1 and MIPI Core 2. The input terminal of MIPI Core 1 is connected with the first communication bus MIPI 1, the output terminal of MIPI Core 1 is correspondingly connected with the sub-register 311 Reg1, and MIPI Core 1 is configured to extract the first control signal transmitted on its connected first communication bus MIPI 1 and write the initial operating parameter(s) carried by the first control signal into the first storage bits Reg01_1 to Reg16_1 of its connected sub-register 311 Reg1. The input terminal of MIPI Core 2 is connected with the first communication bus MIPI 2, the output terminal of MIPI Core 2 is correspondingly connected with the sub-register 311 Reg2, and MIPI Core 2 is configured to extract the first control signal transmitted on its connected first communication bus MIPI 2, and write the initial operating parameter(s) carried by the first control signal into the first storage bits Reg02_2 to Reg16_2 of its connected sub-register 311 Reg2.

In the embodiment of the disclosure, by providing multiple extraction units 210 in the signal extractor 200 and arranging the multiple extraction units 210 to correspond to multiple first communication buses respectively, each of the multiple extraction units 210 may obtain the first control signal transmitted on the corresponding first communication bus and extract the initial operating parameter carried by the first control signal. Since the multiple extraction units 210 of the embodiment work independently of each other, when the communication platform 100 provides the first control signals via multiple first communication buses, the multiple extraction units 210 can extract the initial operating parameters synchronously, thereby improving the extraction speed of initial operating parameters, further improving the speed at which the parameter fusion module 300 outputs the target operating parameter(s), and enabling the second component 400 to quickly configure its operating state in response to the target operating parameter(s), so as to meet the functions that the communication platform 100 requires multiple first components to achieve.

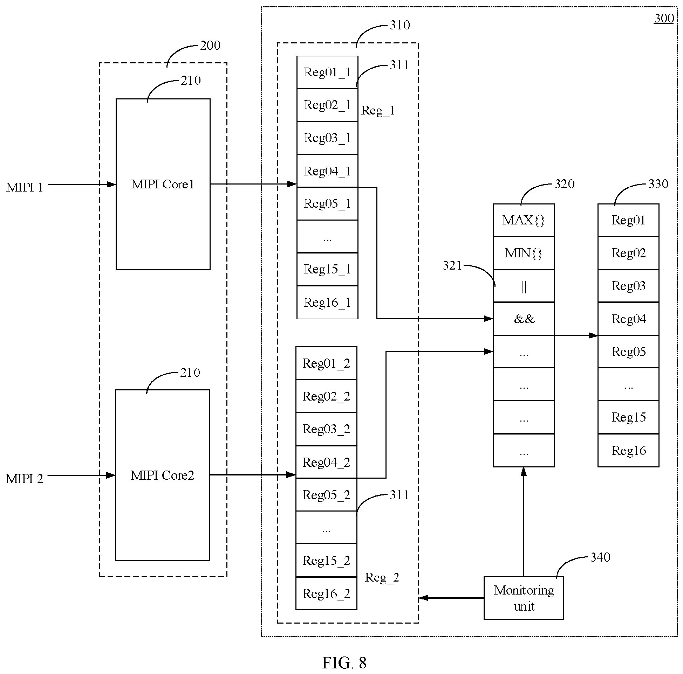

FIG. 8 illustrates a second structural schematic diagram of the signal extractor 200 and the parameter fusion module 300 according to an embodiment. Referring to FIG. 8, in an embodiment, the parameter fusion module 300 further includes a monitoring unit 340. The monitoring unit 340 is connected with each of the first register 310 and the operation unit 320, and configured to monitor data stored in each first storage bit of the first register 310. Specifically, the monitoring unit 340 is configured to monitor whether the data stored in each first storage bit of the first register 310 changes. For example, the monitoring unit 340 may be a software monitoring tool built in the operating system of the electronic device, and the existing software monitoring tool is directly used to collect data changes in the register. For another example, the monitoring unit 340 may also be a newly added monitoring circuit such as a comparator, and the comparator may compare the currently stored data of each first storage bit with the last stored data thereof to determine whether the stored data changes.

When the stored data changes, the monitoring unit 340 may instruct the operation unit 320 to perform the logical operation on the initial operating parameter stored in the first storage bit whose stored data changes. In some implementations, when the initial operating parameter includes multiple data bits, that is, multiple first storage bits are required to store one initial operating parameter, the logical operation may be performed only on the changed data bit of the initial operating parameter that is stored in the first storage bit, or the logical operation may be performed on all the data bits of the initial operating parameter stored in the first storage bits, which may be specifically determined according to the specific type of the logical operation.

For example, the logical operation for the changed initial operating parameter is taking a maximum value. For example, if the initial operating parameter stored in one sub-register 311 is 1001 and the initial operating parameter stored in the other sub-register 311 is 1110, the maximum value obtained through the logical operation is 1110. When the initial operating parameter stored in the sub-register 311 changes from 1110 to 0110, the maximum value obtained through the logical operation changes to 1001. As can be seen, when the logical operation is taking a maximum value, a data change of one first storage bit may cause multiple bits of data in the maximum value obtained through the logical operation to change. Therefore, the parameter fusion module 300 needs to perform the logical operation on the whole initial operating parameter stored in all the first storage bits corresponding to the initial operating parameter, to ensure that the target operating parameter obtained through the logical operation is accurate.

For another example, the logical operation for the changed initial operating parameter is an AND operation. For example, if the initial operating parameter stored in one sub-register 311 is 1001 and the initial operating parameter stored in the other sub-register 311 is 1110, the result obtained through the logical operation is 1000. When the initial operating parameter stored in the sub-register 311 changes from 1110 to 0110, the result obtained through the logical operation changes to 0000. As can be seen, when the logical operation is an AND operation, the data change of one first storage bit does not affect other data bits in the result. Therefore, the parameter fusion module 300 may perform the logical operation only on the changed data bit of the initial operating parameter that is stored in the first storage bit, to improve the operation speed of the parameter fusion module 300.

Further, the monitoring unit 340 may be connected with the operation unit 320, and configure the logical operation performed by the operation unit 320 according to the changed initial operating parameter. For example, by controlling the aforementioned operation selector or operation combination paths, the operation unit 320 can automatically switch the operation logic, and the reliability of the target operating parameter(s) output by the operation unit 320 is ensured.

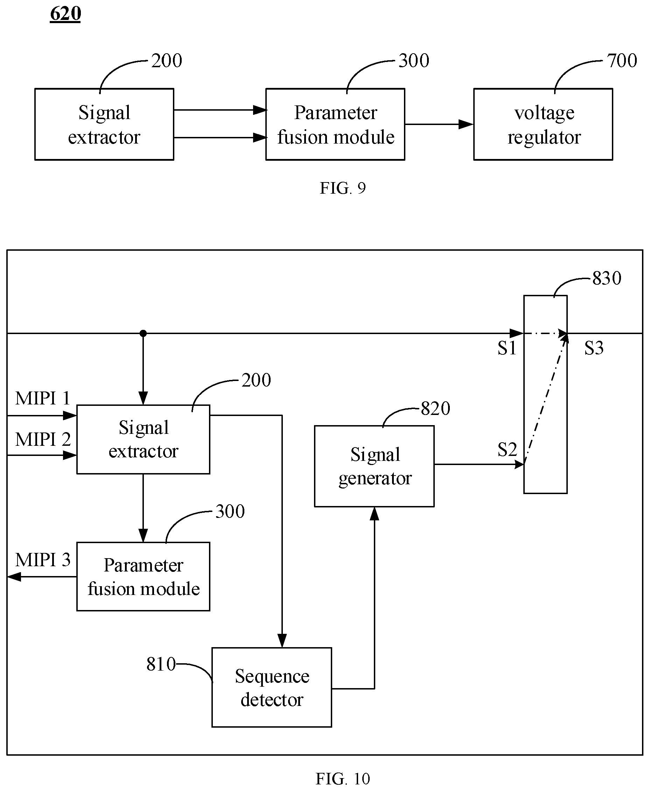

The embodiments of the disclosure further provide an RF power supply 620. FIG. 9 is a structural schematic diagram of an RF power supply 620 according to an embodiment. Referring to FIG. 9, the RF power supply 620 includes a signal extractor 200, a parameter fusion module 300, and a voltage regulator 700.

The signal extractor 200 is configured to be connected with the communication platform 100 via a communication bus, and extract multiple first control signals transmitted on the communication bus. The parameter fusion module 300 is connected with the signal extractor 200, and configured to obtain initial operating parameters carried by the individual first control signals, and perform a logical operation on parameter values of the multiple initial operating parameters to obtain a target operating parameter. The operating parameter includes a power supply parameter, and the power supply parameter includes at least one of a power supply voltage, a power supply current, and power supply power. The voltage regulator 700 is connected with the parameter fusion module 300, and configured to provide a power supply signal to an RF front-end component 610 according to the target power supply parameter.

In the embodiment of the disclosure, one RF power supply 620 supplies power to the RF front-end component 610 related to multiple RF signals, which can reduce the number of RF power supplies 620 provided in the electronic device, thereby reducing the cost, power consumption, and volume of the electronic device. For the communication platform 100, the original control logic and original output mode of control signals can be maintained, and there is no need to make any special settings to the communication platform 100 for adapting to the RF system architecture after component combination. Therefore, the embodiment can effectively reduce situations where required functions cannot be met that would otherwise be caused due to unreleased relevant permissions by the communication platform 100, thereby providing good compatibility and flexibility. Moreover, the signal extractor 200 extracts the initial operating parameters determined by the communication platform 100, and the parameter fusion module 300 fuses the multiple initial operating parameters to obtain the accurate target operating parameter(s), so that the RF power supply 620 after being configured according to the target operating parameter(s) can reliably implement the power supply function, thereby ensuring the normal operation of the communication function of the electronic device, and providing good transmission and reception quality of RF signals.

It is notable that, for relevant descriptions of the signal extractor 200 and the parameter fusion module 300 in the embodiment, reference may be made to the foregoing embodiments, which will not be repeated here.

The embodiments of the disclosure further provide an RF controller. FIG. 10 is a structural schematic diagram of an RF controller according to an embodiment. Referring to FIG. 10, the RF controller includes a signal extractor 200 and a parameter fusion module 300.

The signal extractor 200 is configured to be connected with a communication platform 100 via a communication bus, and extract multiple first control signals transmitted on the communication bus. The parameter fusion module 300 is connected with the signal extractor 200, and configured to obtain initial operating parameters carried by the individual first control signals, and perform a logical operation on parameter values of the multiple initial operating parameters to obtain a target operating parameter. The parameter fusion module 300 is further configured to be connected with a second component 400, and the second component 400 is adapted to configure an operating state of the second component 400 according to the target operating parameter.

In the embodiments of the disclosure, the functions required to be implemented by multiple first components of a same type are combined and implemented by one second component 400, which can reduce the number of components provided in the electronic device, thereby reducing the cost, power consumption, and volume of the electronic device. For the communication platform 100, the original control logic and original output mode of control signals can be maintained, and there is no need to make any special settings to the communication platform 100 for adapting to the RF system architecture after component combination. Therefore, the embodiments can effectively reduce situations where required functions cannot be met that would otherwise be caused due to unreleased relevant permissions by the communication platform 100, thereby providing good compatibility and flexibility. Moreover, the signal extractor 200 extracts the initial operating parameters determined by the communication platform 100 for the individual first components, and the parameter fusion module 300 fuses the initial operating parameters of the multiple first components to obtain the accurate target operating parameter(s), so that the second component 400 after being configured according to the target operating parameter(s) can reliably implement the functions required to be implemented by the multiple first components, thereby ensuring the normal operation of the communication function of the electronic device, and providing good transmission and reception quality of RF signals.

With continued reference to FIG. 10, in an embodiment, the signal extractor 200 is further configured to extract a second control signal transmitted on the communication bus, the second control signal being used to control a third component. Specifically, the signal extractor 200 is configured to extract a second control signal transmitted by a second communication bus. The third component includes a component not involved in the aforementioned combination. The RF controller further includes a sequence detector 810, a signal generator 820, and a path selector 830.

The sequence detector 810 is connected with the signal extractor 200, and configured to generate a matching signal when the second control signal includes a target sequence. The sequence detector 810 may learn, through pre-configuration, the control strategy of the communication platform 100 and the corresponding second control signal in advance. For example, if the communication platform 100 sends a second control signal used to instruct the low noise amplifier to turn on, it shows that the communication system is about to start receiving a RF signal. If the communication platform 100 sends a second control signal used to instruct the filter to switch the filtering frequency band, it shows that the communication system is about to transmit or receive RF signals of other frequency bands.

The signal generator 820 is connected with the sequence detector 810, and configured to generate, according to the matching signal, a corresponding third control signal. The signal generator 820 may generate multiple third control signals, and different third control signals may be used to adjust the RF front-end component 610 differently. In some implementations, different third control signals may be used to adjust different RF front-end components 610 respectively, or may be used to adjust a same RF front-end component 610 to adopt different operating parameters. For example, the power amplifier and the low noise amplifier may adjust the amplification magnification according to a configuration signal, the power amplifier may adjust the bias voltage according to the configuration signal, the RF switch may, according to the configuration signal, switch the transmission paths for signals of different frequency bands or adjust the switching between different transmitting and receiving antennas for signals of a same frequency band, and the tuner may adjust the resonant frequency of the antenna according to the configuration signal. It is notable that the aforementioned RF front-end component 610 and its adjustable operating states are only for illustrative purposes, and are not intended to limit the protection scope of the embodiments.

The path selector 830 has two first terminals and at least one second terminal. The two first terminals of the path selector 830 are respectively connected to the communication platform 100 and the signal generator 820, and the second terminal of the path selector 830 is connected with the third component. The path selector 830 is configured to select one of the second control signal and the third control signal, and transmit the selected control signal to the third component to configure the operating state of the third component.

Specifically, the two first terminals of the path selector 830 are S1 and S2 respectively, and the second terminal of the path selector 830 is S3. When the path selector 830 makes different signal transmission paths conducted, the RF front-end component 610 is controlled by different master devices. The path selector 830 has two states. In state 1, the first terminal S1 is electrically connected with the second terminal S3, and the RF front-end component 610 is controlled by the communication platform 100. In state 2, the first terminal S2 is electrically connected with the second terminal S3, and the RF front-end component 610 is controlled by the RF controller. It is notable that, when the second communication bus is a MIPI bus as illustrated in the embodiments or other buses requiring two-wire synchronous transmission, each port of the path selector 830 substantially includes two sub-ports. For example, as illustrated in the figure, each of the three ports S1, S2, and S3 includes two sub-ports. The two sub-ports are respectively used to transmit MIPI_SCLK and MIPI_SDATA, and the two sub-ports are simultaneously switched on or off under the control of the path selector 830. For convenience of description, in the embodiments of the disclosure, two sub-ports used for synchronously transmitting MIPI_SCLK and MIPI_SDATA signals are collectively referred to as one terminal.

By monitoring the second communication bus through the signal extractor 200, the control function currently performed by the communication platform 100 may be accurately obtained, and the idle time of the second communication bus may be learned. By integrating the path selector 830, the control right of the RF front-end component 610 may be switched between the communication platform 100 and the RF controller, realizing multi-terminal control of the RF front-end component 610. Therefore, when switching is not required, the technical solution of this embodiment can maintain the control right of the communication platform 100 over the second communication bus. When the second communication bus is idle, the path selector 830 may switch the RF controller to issue commands for control, thereby realizing fast switching of the operating state of the RF front-end component 610 and achieving good RF performance. That is, the RF controller of this embodiment can realize flexible control of the RF front-end component 610.

The various technical features of the above embodiments can be combined arbitrarily. For the sake of brevity, not all possible combinations of the technical features in the above embodiments are described. However, as long as there is no contradiction in the combination of these technical features, they should be considered as falling within the scope recorded in the specification.

The above embodiments only describe several implementations of the embodiments of the disclosure, and the descriptions thereof are relatively specific and detailed, but they cannot be understood as a limitation on the scope of the disclosure. It is notable that those skilled in the art can make several modifications and improvements without departing from the concept of the embodiments of the disclosure, and these all fall within the protection scope of the embodiments of the disclosure. Therefore, the protection scope of the disclosure shall be subject to the appended claims.

## Claims

1. An electronic device, comprising:
a communication platform (100) configured to provide multiple first control signals carrying initial operating parameters, wherein the multiple first control signals are used to control multiple first components of a same type respectively;
a signal extractor (200) connected with the communication platform (100) via a communication bus, wherein the signal extractor (200) is configured to extract the initial operating parameters carried by the multiple first control signals transmitted on the communication bus;
a parameter fusion module (300) connected with the signal extractor (200), wherein the parameter fusion module (300) is configured to perform a logical operation on parameter values of the multiple initial operating parameters, and obtain a target operating parameter through the logical operation; and
a second component (400) connected with the parameter fusion module (300), wherein the second component (400) is of the same type as the first components, and the second component (400) is adapted to configure an operating state of the second component (400) according to the target operating parameter.

2. The electronic device as claimed in claim 1, wherein the parameter fusion module (300) comprises:
a first register (310) configured to store the multiple initial operating parameters;
an operation unit (320) connected with the first register (310), wherein the operation unit (320) is configured to obtain the multiple initial operating parameters stored in the first register (310), and perform the logical operation on the parameter values of the multiple initial operating parameters and obtain the target operating parameter through the logical operation;
a second register (330) connected with the operation unit (320), wherein the second register (330) is configured to store the target operating parameter generated by the operation unit (320);
wherein the second component (400) is connected with the second register (330), and configured to obtain the target operating parameter stored in the second register (330).

3. The electronic device as claimed in claim 2, wherein the first register (310) comprises multiple sub-registers (311), each of the sub-registers (311) is configured with multiple first storage bits, the second register (330) is configured with multiple second storage bits, and the multiple first storage bits correspond to the multiple second storage bits respectively;
wherein the operation unit (320) is configured to obtain initial operating parameters stored in same first storage bits of the multiple sub-registers (311), and store the generated target operating parameter in a corresponding second storage bit.

4. The electronic device as claimed in claim 3, wherein the operation unit (320) comprises multiple logic operation circuits (321), multiple input terminals of each of the logic operation circuits (321) are capable of being respectively connected with same first storage bits of the multiple sub-registers (311), and an output terminal of each of the logic operation circuits (321) is capable of being connected with a corresponding second storage bit of the second register (330).

5. The electronic device as claimed in claim 4, wherein the parameter fusion module (300) further comprises:
an operation selector, wherein multiple first terminals of the operation selector are respectively connected to the multiple first storage bits of the multiple sub-registers (311), and multiple second terminals of the operation selector are respectively connected to the multiple logic operation circuits (321); and
a first control circuit connected with the operation selector, wherein the first control circuit is configured to selectively conduct, according to to-be-operated first storage bits, a signal transmission path between each first terminal connected with the to-be-operated first storage bits and any second terminal of the operation selector, thereby electrically connecting the to-be-operated first storage bits with a corresponding logic operation circuit (321).

6. The electronic device as claimed in claim 5, wherein each of the multiple logic operation circuit (321) is capable of being electrically connected with different first storage bits at different times, through the operation selector.

7. The electronic device as claimed in claim 3, wherein the operation unit (320) comprises:
multiple logic operation circuits (321);
multiple operation combination paths configured to connect different logic operation circuits among the multiple logic operation circuits (321); and
a second control circuit connected with the operation combination paths, wherein the second control circuit is configured to control on-off of each of the operation combination paths according to to-be-operated first storage bits, thereby connecting the multiple logic operation circuits (321) into a combined logic circuit, the combined logic circuit being adapted to support a logical operation for the to-be-operated first storage bits.

8. The electronic device as claimed in any one of claims 3 to 7, wherein the signal extractor (200) is connected with the communication platform (100) via multiple first communication buses, the multiple first communication buses respectively correspond to the multiple first control signals, and the signal extractor (200) comprises:
multiple extraction units (210), wherein input terminals of the multiple extraction units (210) are respectively connected with the multiple first communication buses, output terminals of the multiple extraction units (210) are respectively connected to the multiple sub-registers (311), and each of the extraction units (210) is configured to extract the first control signal transmitted on its connected first communication bus, and write the initial operating parameter carried by the first control signal into its connected sub-register (311).

9. The electronic device as claimed in any one of claims 3 to 8, wherein the parameter fusion module (300) further comprises:
a monitoring unit (340) connected to each of the first register (310) and the operation unit (320), wherein the monitoring unit (340) is configured to monitor data stored in each of the first storage bits of the first register (310), and instruct, when the data stored in a first storage bit changes, the operation unit (320) to perform the logical operation on the initial operating parameter stored in the first storage bit whose stored data changes.

10. The electronic device as claimed in any one of claims 1 to 9, wherein the electronic device further comprises:
a signal combiner (510), wherein input terminals of the signal combiner (510) are connected with the communication platform (100), and the signal combiner (510) is configured to combine multiple radio frequency, RF, signals output by the communication platform (100) into one RF signal;
an RF front-end component (610) connected with an output terminal of the signal combiner (510), wherein the RF front-end component (610) is configured to perform transmission processing on the RF signal output by the signal combiner (510); and
an antenna connected with the RF front-end component (610), wherein the antenna is configured to transmit the processed RF signal;
wherein the communication platform (100) is configured to determine, according to signal frequency bands of the RF signals output by the communication platform (100), corresponding initial operating parameters.

11. The electronic device as claimed in any one of claims 1 to 9, wherein the electronic device further comprises:
an antenna configured to receive an RF signal;
an RF front-end component (610) connected with the antenna, wherein the RF front-end component (610) is configured to perform reception processing on the received RF signal;
a signal splitter (520), wherein an input terminal of the signal splitter (520) is connected with the RF front-end component (610), output terminals of the signal splitter (520) are connected with the communication platform (100), and the signal splitter (520) is configured to split the received RF signal into multiple RF signals and output the multiple RF signals to the communication platform (100);
wherein the communication platform (100) is configured to determine, according to signal frequency bands of the received RF signal, corresponding initial operating parameters.

12. The electronic device as claimed in claim 10 or 11, wherein the second component (400) comprises an RF power supply (620), the RF power supply (620) is connected with the RF front-end component (610), and the RF power supply (620) is configured to provide a power supply signal for the RF front-end component (610);
wherein the operating parameter comprises a power supply parameter, the power supply parameter comprises at least one of a power supply voltage, a power supply current, and power supply power, the communication platform (100) is configured to determine, according to the signal frequency bands of the RF signals, corresponding initial power supply parameters, and the RF power supply (620) is configured to provide the power supply signal according to the target power supply parameter.

13. The electronic device as claimed in claim 10 or 11, wherein the second component (400) is the RF front-end component (610), the operating parameters comprise operating parameters of the RF front-end component (610), and the RF front-end component (610) is configured to perform transmission processing or reception processing on the RF signal according to the target operating parameter.

14. The electronic device as claimed in claim 10 or 11, wherein the second component (400) comprises a filter, the filter is configured to, according to the target operating parameter, allow the signal frequency bands of the RF signals to pass therethrough, and filter out clutter signals of other frequency bands other than the RF signals.

15. The electronic device as claimed in claim 1, wherein the signal extractor (200) is further configured to extract a second control signal transmitted on the communication bus, the second control signal being used to control a third component; and the electronic device further comprises:
a sequence detector (810) connected with the signal extractor (200), wherein the sequence detector (810) is configured to generate a matching signal when the second control signal includes a target sequence;
a signal generator (820) connected with the sequence detector (810), wherein the signal generator (820) is configured to generate, according to the matching signal, a corresponding third control signal;
a path selector (830), wherein two first terminals of the path selector (830) are respectively connected with the communication platform (100) and the signal generator (820), a second terminal of the path selector (830) is connected with the third component, and the path selector (830) is configured to select one of the second control signal and the third control signal and transmit the selected one control signal to the third component to configure an operating state of the third component.
